# EUROPÄISCHE PATENTANMELDUNG

(11) **EP 0 898 996 A2**
(43) Veröffentlichungstag der Anmeldung: **03.03.1999**
(21) Anmeldenummer: 98115509.6
(22) Anmeldetag: 18.08.1998
(51) Int. Cl.: B01D 24/46

(54) **Verfahren und Vorrichtung zum Regenerieren eines Filtermaterials**

(30) Priorität: 18.08.1997 DE 19735672
(71) Anmelder: Maier & Partner Abwassertechnik Vertriebs-GmbH, 48249 Dülmen (DE)
(72) Erfinder: Kersting, Wolfgang, 48249 Dülmen (DE); Maier, Alois, 87719 Mindelheim (DE); Schropp, Christian, 87776 Sontheim b. Memmingen (DE)
(74) Vertreter: Fiener, Josef

(57) **Zusammenfassung**

Die Erfindung bezieht sich auf ein Verfahren und eine Vorrichtung zum Regenerieren eines Filtermaterials, insbesondere eines Filterbetts und eine Filtervorrichtung hierzu. Das Verfahren umfaßt die Schritte des Durchspülens eines Filtermaterials mit einem zu reinigenden Medium derart, daß im Filtermaterial ein Wirbelbett ausgebildet wird, und das Abführen von Filtermaterial und Filtrat aus dem Wirbelbett. Die Filtervorrichtung zum Regenerieren eines Filtermaterials umfaßt einen Boden (13) zum Abstützen eines Filterkörpers (14) aus einem körnigen Filtermaterial, Öffnungen (15) im Boden (13) zur Durchströmung eines zu reinigenden Mediums in den Filterkörper (14) hinein, wobei die Öffnungen (15) kleiner als das Filtermaterial sind, eine Abführungseinrichtung (20, 22) und eine Zuführungseinrichtung (30) zu den Öffnungen (15) im Boden (13), wobei in zumindest einem unteren Bereich des Filterkörpers (14) ein Wirbelbett (16) ausgebildet wird. Dadurch wird für Filteranlagen eine besonders kompakte Bauweise möglich.

## Beschreibung

Die Erfindung bezieht sich auf ein Verfahren und eine Vorrichtung zum Regenerieren eines Filtermaterials, insbesondere eines Filterbetts, sowie eine Filtervorrichtung mit einer solchen Vorrichtung. Ein derartiges Verfahren und eine Vorrichtung zum Filtern einer mit Schmutzteilchen befrachteten Flüssigkeit sind aus der DE 42 10 571 C1 bekannt.

Zum Filtern von Flüssigkeiten sind Filtervorrichtungen mit einem Filtermedium wie Quarzsand oder körniger Aktivkohle gebräuchlich. Bei solchen Filtervorrichtungen besteht das Problem, daß sich deren Filterkörper insbesondere im Einlaßbereich von zu reinigendem Schmutzwasser durch Schmutzteilchen und Schwebstoffe relativ schnell zusetzen. Daher muß der Sand oft ausgetauscht oder gereinigt werden.

Zum Abführen von einer verschmutzten Sandschicht eines Filterkörpers ist aus der DE 39 09 970 C2 ein Kratzerförderer bekannt. Die DE 41 12 237 C1 beschreibt weiterhin eine Absaugvorrichtung, bei der zum Absaugen von verschmutztem Sand eine Saugeinrichtung mittels eines Kettenantriebs durch den Sand des Filterkörpers gezogen wird. Derartige Vorrichtungen sind jedoch baulich sehr aufwendig gestaltet.

Baulich weniger aufwendig sind Filtervorrichtungen ausgebildet, bei denen das Filtrat, d. h. aus dem Schmutzwasser herausgefilterte Bestandteile, aus dem Sand des Filterkörpers durch eine Umkehr der Durchflußrichtung herausgespült wird. Beim Rückspülen wird jedoch viel Wasser als abzuleitendes Spülwasser verbraucht. Verfahren und Vorrichtungen zum Rückspülen eines Filterkörpers sind z. B. in der DE 26 30 195 B2, der DT 21 39 756 B2 oder auch der DE 295 20 228 U1 offenbart. Aus der DE 35 35 816 A1 ist zudem der Einsatz einer Luftströmung bekannt, um den Spülwasserverbrauch zu verringern.

Bei einfachen Vorrichtungen und Verfahren, die ein Rückspülen ermöglichen, muß zudem der Reinigungsbetrieb für das Schmutzwasser während des Rückspülens unterbrochen werden. Soll der Reinigungsbetrieb während des Rückspülens fortgesetzt werden, sind aufwendiger ausgestaltete Filteranlagen erforderlich.

Aus der DE 42 10 571 C1 und -in ähnlicher Form- dem Prospekt "DynaSand-Filter: Die wirtschaftliche und energiesparende Methode zur Reinigung von Wasser und Abwasser. Effektiv. Kontinuierlich." der Axel Johnson Engineering GmbH, Neuss, sind Sandfilter bekannt, bei denen der Spülwasserverbrauch gering gehalten werden soll. Diese Filtervorrichtungen haben im wesentlichen ein Gehäuse mit einem oberen, zylindrischen Gehäuseteil, dessen zylindersymmetrische Achse aufgestellt vertikal verläuft, und ein Gestell zum Abstützen des Gehäuses. In das Gehäuse ist als Filterkörper Sand eingefüllt. Schmutzwasser wird über ein erstes Rohr im Bereich zwischen den beiden Gehäuseteilen in den Sand verteilt eingeleitet. Von dort strömt es aufwärts, wird vom Sand gefiltert und tritt im oberen Bereich des Gefäßes aus diesem gereinigt aus.

Zum Regenerieren oder Reinigen des verschmutzten Sandes wird dieser im Bodenbereich des Gefäßes an einer zentralen Absaugstelle abgesaugt und in eine Wascheinrichtung gefördert, die in den oberen Bereich des Gefäßes eingesetzt ist. Aus der Wascheinrichtung fällt der regenerierte Sand nach unten in das Gefäß auf den Filterkörper zurück, während stark verschmutztes Spülwasser nach außen hin abgeleitet wird.

Damit der verschmutzte Sand zu der zentralen Absaugstelle gelangen kann, muß der untere Teil des Gefäßes zwangsläufig trichterförmig ausgebildet sein. Dies bedingt wiederum eine hohe Bauweise, die aufwendig ist. Zudem ist ein Einbau an Stellen wie z. B. KFZ-Waschanlagen, wo nur eine begrenzte Stellhöhe von ca. 3 m verfügbar ist, oftmals nicht möglich. Derartige Filteranlagen mit einem unteren, trichterförmigen Abschnitt müssen zudem zur Abstützung aus Metall, insbesondere Edelstahl hergestellt werden, wodurch hohe Kosten entstehen, insbesondere auch für das aufwendige Stützgestell.

Die Aufgabe der Erfindung besteht somit darin, ein Verfahren und eine Vorrichtung zum Abführen/Regenerieren eines Filtermaterials, insbesondere eines Filterbetts sowie eine Filtervorrichtung mit einer solchen Vorrichtung zu schaffen, die einen besonders einfachen Aufbau ermöglichen.

Diese Aufgabe wird durch ein Verfahren und eine Vorrichtung zum Abführen und/oder Regenerieren eines Filtermaterials sowie eine Filtervorrichtung mit einer solchen Vorrichtung gemäß den Merkmalen der Patentansprüche 1 bzw. 4 gelöst.

Dieses vorgeschlagene Verfahren ermöglicht eine einfache Abführung bzw. Regenerierung von verschmutztem Filtermaterial und Filtrat. Die Vorrichtung ermöglicht einen wesentlich kompakteren, niedrigeren Aufbau einer Filteranlage im Vergleich zum Stand der Technik. Insbesondere wird ein Trichterbereich und damit ein Stützgestell zum Aufstellen einer Filteranlage nicht mehr erforderlich. Aufgrund der vereinfachten Bauform kann die Filteranlage auch aus einem einfacheren und kostengünstigeren Material wie Kunststoff hergestellt werden.

Weitere vorteilhafte Ausgestaltungen sind Gegenstand von Unteransprüchen. So wird durch ein verzweigtes/verästeltes Zuführungssystem der Druck des zu reinigenden Mediums geeignet abgebaut und über den Boden verteilt, um ein ausreichendes Wirbelfeld im unteren Bereich des Filterbetts zu erzeugen. Ein solcher Boden mit eng nebeneinander liegenden Leisten, bevorzugt mit Dreiecksquerschnitt, die auf den Stegen der Zuführungseinrichtung abgestützt oder in dieser integriert sind, kann leicht hergestellt und installiert werden.

Ein Ausführungsbeispiel der Erfindung wird anhand der Zeichnung näher erläutert. Es zeigen:
- Fig. 1: eine Filtervorrichtung mit einer Vorrichtung zum Regenerieren eines Filtermaterials in einer seitlichen Schnittansicht; und
- Fig. 2: einen Schnitt durch ein unteres Zufluß- und Verteilungssystem der Filtervorrichtung für Schmutzwasser in Draufsicht.

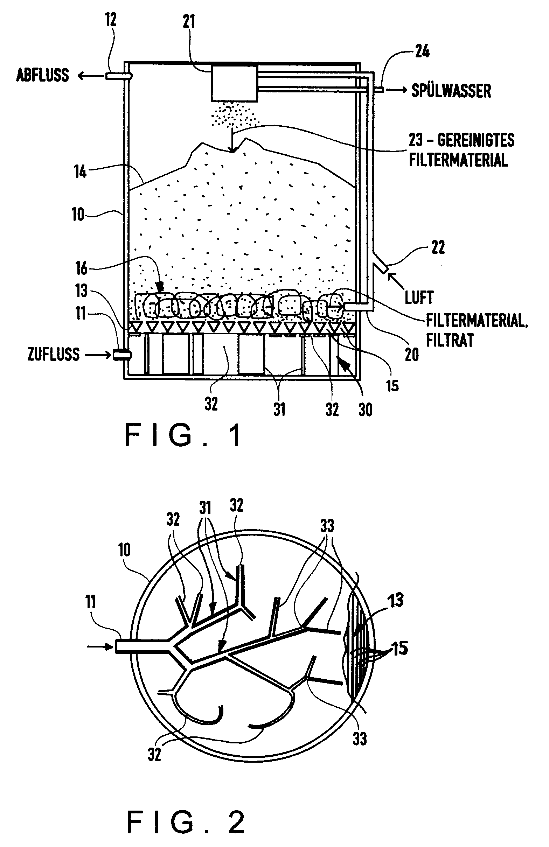

Wie aus Fig. 1 ersichtlich, umfaßt eine Filtervorrichtung ein vorzugsweise zylindrisches Gefäß 10 mit einem Zuflußanschluß 11 im unteren Bereich und einem Abflußanschluß 12 im oberen Bereich. Oberhalb des Zuflußanschlusses 11 ist in das Gefäß 10 ein gitterartiger, rostartiger oder perforierter Boden 13 quer durch dessen Querschnitt eingesetzt.

Der Boden 13 stützt einen Filterkörper 14 aus einem körnigen Filtermaterial wie beispielsweise Quarzsand oder Aktivkohle ab. Im Boden 13 sind eine Vielzahl von Öffnungen 15 mit einem Querschnitt ausgebildet, der so bemessen ist, daß Schmutzwasser mit Schmutzpartikeln und Schwebstoffen vom Zuflußanschluß 11 aus in den Filterkörper 14 hinein strömen, das Filtermaterial jedoch nicht hindurch treten kann. Der Querschnitt der Öffnungen 15 beträgt vorzugsweise, aber nicht notwendig weniger als 0,5 mm, der insbesondere durch eine Vielzahl von nebeneinander mit diesen Spaltabstand liegenden Leisten mit Dreiecksquerschnitt gebildet wird. Schmutzwasser kann somit in den Filterkörper 14 hinein und durch diesen zum Abflußanschluß 12 hin strömen, wobei mitgeführter Schmutz und Schwebstoffe vom Filtermaterial zurückgehalten werden.

Zum Abführen und Regenerieren des insbesondere unteren Abschnitts vom Filterkörper 14 bzw. Filtermaterial ist zumindest eine Abführungseinrichtung 20 im Umfangsbereich des Gefäßes 10 ausgebildet, über die ein verschmutzter Teil des Filtermaterials aus dem Filterkörper 14 heraus abgeführt wird. Das Filtermaterial wird somit über dieses Absaugrohr in eine obere Wascheinrichtung 21 für verschmutztes Filtermaterial geführt.

Zum Abführen des Filtermaterials wird vorzugsweise eine Pumpe eingesetzt, die z. B. Druckluft über einen Pumpenanschluß 22 in das Absaugrohr der Abführungseinrichtung 20 in Art eines Injektors einbläst. Die Druckluft fördert somit Wasser, verschmutztes Filtermaterial und Filtrat durch das ansteigende Absaugrohr zur Wascheinrichtung 21 hin.

Die Wascheinrichtung 21 befindet sich vorzugsweise im oberen zentralen Bereich des Gefäßes 10, so daß das gereinigte Filtermaterial 23, z. B. gereinigter Sand, aus dieser heraus auf den Filterkörper 14 zurückfallen kann. Die Wascheinrichtung 21 kann aber auch außerhalb des Gefäßes 10 angeordnet sein oder ganz entfallen, wobei dann entsprechende Vorkehrungen zum Zurückführen des gereinigten und/oder von neuem Filtermaterial 23 bereitzustellen wären.

Von der Wascheinrichtung 21 aus wird Spülwasser mit dem Schmutz und den Schwebstoffen, die aus dem Filtermaterial herausgewaschen wurden, über einen Spülwasseranschluß 24 aus dem System heraus oder zu einer anderen Reinigungsanlage abgeführt. Bei KFZ-Waschanlagen werden insbesondere Wachs, Rückstände von Reinigungsmitteln und Wasser abgeführt. Das Spülwasser kann abhängig von der Verschmutzung auch in den Zulauf des Schmutzwassers zurückgeleitet werden.

Damit das Filtermaterial mit Schmutz und Schwebstoffen zum Absaugrohr hin gelangt, wird das Schmutzwasser mit geringem Überdruck von unten her so durch die Öffnungen 15 des Bodens 13 gepreßt, daS das Filtermaterial über dem Boden 13 verwirbelt. Dadurch entsteht im vorzugsweise unteren Bereich des Filterkörpers 14 ein fluidisiertes Wirbelbett 16, über das Filtermaterial und aus dem Schmutzwasser herausgefiltertes Filtrat zum Absaugrohr 20 hin gelangt.

Wie aus Fig. 1 und 2 ersichtlich, liegt der Boden 13 in Form z. B. eines Siebs, Rostes oder Spaltenbodens vorzugsweise auf den Wandungsstegen eines Zuführungssystem 30 abgestützt auf. Dieses umfaßt insbesondere vertikale Stegbereiche 31 und verästelnde bzw. verzweigende Leitungen 32. Über diese wird Schmutzwasser vom Zuflußanschluß 11 aus unter dem Boden 13 verteilt. Das gegenüber dem Stand der Technik flach ausgebildete Zuführungssystem 30 bewirkt, daß das Schmutzwasser durch die im Boden 13 befindlichen Öffnungen 15 so in den Filterkörper 14 eindringt, daß darin ein breitflächiges Wirbelbett 16 ausgebildet wird.

Form und Anzahl der Verzweigungsleitungen 32 und von weiteren Abzweigungen/Verästelungen 33 können geeignet gewählt werden. Sie hängen z. B. von der Bauform des Gefäßes 10 und dem Material des Filterkörpers 14 ab. Auch müssen die Leitungen 32 und 33 nicht über die gesamte Höhe vom Boden des Gefäßes 10 zum Boden 13 hin führen, sondern können auch hinsichtlich ihrer Höhenabmessung variiert werden, beispielsweise vom Zufluß 11 ansteigend verlaufen.

Der Boden 13 kann auch einstückig mit dem Zuführungssystem 30 ausgebildet werden, z.B. als Gußteil. Bevorzugt kann er aus einigen hundert parallel nebenangeordneten Stäben bestehen, die zwischen sich die düsenförmigen Spalten bzw. Öffnungen 15 mit einem Querschnitt geringer als die Korngröße des Quarzsandes bilden. Bei einem derartigen stabilen Stützaufbau kann als Material für das Gefäß 10 oder ein Teil von diesem anstelle von Metall auch ein anderer Werkstoff, z. B. Kunststoff verwendet werden, da der Boden 13 über die Stege 31 direkt abgestützt ist und somit das tonnenschwere Gewicht des Filterkörpers 14 aufnimmt.

Ein oder mehrere Absaugrohre 20 müssen nicht notwendig von außen her im Umfangsbereich des Gefäßes 10 im Filterkörper 14 münden. Sie können z. B. auch innerhalb des Gefäßes 10 geführt verlaufen. Auch muß das Abführen verschmutzten Filtermaterials nicht unmittelbar am Boden des Filterkörpers 14 erfolgen. Das Wirbelbett 16 kann auch so stark sein, daß höher gelegene Bereiche des Filtermaterials aufgewirbelt und zur Regenerierung über entsprechend höher angeordnete Saugrohre abgeführt werden. Zum Verstärken der Wirbelbildung im Wirbelbett 16 kann dabei über das Zuführungssystem 30 neben Schmutzwasser z. B. auch Druckluft zugeführt werden.

## Patentansprüche

1. Verfahren zum Abführen, insbesondere zum Regenerieren eines Filtermaterials, insbesondere eines Filterbetts mit den Schritten:
Durchspülen eines Filtermaterials mit einem zu reinigenden Medium derart, daß im Filtermaterial ein Wirbelbett ausgebildet wird, und
Abführen von Filtermaterial und Filtrat aus dem Wirbelbett.

2. Verfahren zum Abführen eines Filtermaterials nach Anspruch 1,
dadurch gekennzeichnet,
daß das Zuführen des Mediums zum Durchspülen über ein verzweigtes Zuführungssystem erfolgt.

3. Verfahren zum Abführen eines Filtermaterials nach Anspruch 1 oder 2,
dadurch gekennzeichnet,
daß das Abführen von Filtermaterial und Filtrat über Abpumpen zu einer Wascheinrichtung für das Filtermaterial erfolgt.

4. Vorrichtung zum Abführen und/oder Regenerieren eines Filtermaterials, insbesondere eines Filterbetts mit:
einem Boden (13) zum Abstützen eines Filterkörpers (14) aus einem vorzugsweise körnigen Filtermaterial,
einer oder vorzugsweise einer Vielzahl von Öffnungen (15) im Boden (13) zur Durchströmung eines zu reinigenden Mediums in den Filterkörper (14) hinein,
wobei die Öffnungen (15) kleiner als das Filtermaterial ausgebildet sind,
einer Abführungseinrichtung (20, 22) zum Abführen von Filtermaterial und Filtrat, und
einer Zuführungseinrichtung (30) zu den Öffnungen (15) im Boden (13), wobei in zumindest einem Bereich des Filterkörpers (14) ein Wirbelbett (16) ausgebildet ist.

5. Vorrichtung zum Abführen eines Filtermaterials nach Anspruch 4,
dadurch gekennzeichnet,
daß der Boden (13) von der Zuführungseinrichtung (30) abgestützt wird.

6. Vorrichtung zum Abführen eines Filtermaterials nach Anspruch 4 oder 5,
dadurch gekennzeichnet,
daß der Boden (13) Bestandteil der Zuführungseinrichtung (30) ist.

7. Vorrichtung zum Abführen eines Filtermaterials nach einem der Ansprüche 4 bis 6,
dadurch gekennzeichnet,
daß die Abführungseinrichtung (20, 22) Filtermaterial und Filtrat zu einer Wascheinrichtung (21) für das Filtermaterial abführt, insbesondere abpumpt.

8. Vorrichtung zum Abführen eines Filtermaterials nach Anspruch 7,
dadurch gekennzeichnet,
daß die Wascheinrichtung (21) Spülwasser mit Filtrat aus der Vorrichtung abführt und das Filtermaterial wieder dem Filterkörper (14) zuführt.

9. Vorrichtung zum Abführen eines Filtermaterials nach einem der Ansprüche 4 bis 8,
dadurch gekennzeichnet,
daß die Zuführungseinrichtung (30) zumindest einen Zuflußanschluß (11) für das zu reinigende Medium und mehrere Verzweigungsleitungen (32) aufweist.

10. Vorrichtung zum Abführen eines Filtermaterials nach einem der Ansprüche 4 bis 9,
dadurch gekennzeichnet,
daß Vorrichtungswandungen (10), der Boden (13) und/oder die Zuführungseinrichtung (30) aus Kunststoff bestehen.
